(19) **Europäisches Patentamt**

**European Patent Office**

**Office européen des brevets**

(11) **EP 0 834 858 B1**

(12) **EUROPEAN PATENT SPECIFICATION**

(45) Date of publication and mention
of the grant of the patent:
**22.05.2002  Bulletin 2002/21**

(51) Int Cl.⁷: **G10L 15/12**

(21) Application number: **97116664.0**

(22) Date of filing: **24.09.1997**

(54) **Pattern dissimilarity calculation method and apparatus therefor**

Verfahren zur Berechnung der Unähnlichkeit von Mustern und Vorrichtung dafür

Procédé de calcul de dissemblance de formes et dispositif à cet effet

(84) Designated Contracting States:
**DE FR NL**

(30) Priority: **03.10.1996  JP  26332896**

(43) Date of publication of application:
**08.04.1998  Bulletin 1998/15**

(73) Proprietor: **NEC CORPORATION**
**Tokyo (JP)**

(72) Inventor: **Hirayama, Hiroshi**
**Minato-ku, Tokyo (JP)**

(74) Representative: **Glawe, Delfs, Moll & Partner**
**Patentanwälte**
**Postfach 26 01 62**
**80058 München (DE)**

(56) References cited:
**EP-A- 0 162 255      EP-A- 0 458 615**
**EP-A- 0 525 640**

**Description**

BACKGROUND OF THE INVENTION

Field of the Invention

The present invention relates to a pattern dissimilarity calculation method and apparatus thereof used for pattern matching, particularly, for sequence pattern matching used for speech recognition etc.

Description of the Related Art

A widely available method for speech recognition, described, for example, in pages 149-151 of "Digital Speech Processing" (hereafter referred to as reference 1) written by Sadaoki Furui, published by Tokai University in September, 1985, is one which calculates the distances between a group of reference patterns prepared in advance by analyzing the pronunciation of words, and an input pattern obtained by analyzing voice input, and then outputs as the recognition result the word that corresponds to the reference pattern whose distance from the input pattern is the smallest.

The length of a spoken word or phrase varies in a nonlinear fashion every time it is uttered. In order to achieve high recognition rates, it is effective to adopt a time base normalization method that will regulate the time base of the inputted speech to allow matching against reference patterns and computing pattern dissimilarities.

A method of obtaining the distance between patterns by dynamic time base warping is the DP matching method introduced in page 1651, for instance, of a paper (hereafter referred to as reference 2) entitled "A High Speed DP-matching Algorithm Based on Frame Synchronization, Beam Search, and Vector Quantization" published in the September 1988 issue of the Electronic Information Communication Society Monograph Magazine D Vol.J71-D, No. 9, pp.1650-1659. Said method is widely used not only for speech recognition but also for the recognition of other patterns, such as characters, that involve time base patterns.

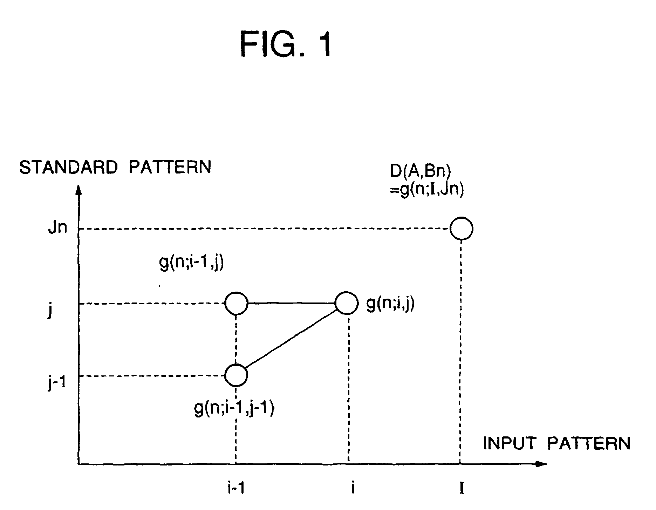

The DP matching method in speech recognition will now be explained with reference to Fig. 1. Fig. 1 is a conceptual diagram of the DP matching method.

An input pattern A is represented as a sequence of acoustic features $a_i(I=1, 2, ..., I)$ obtained by analyzing the input speech signals in each of the I frames of certain lengths, and is represented in the following form (1).

$$A=(a_1, a_2 ..., a_i, ..., a_I) \tag{1}$$

Likewise, given that the number of words recognizable by a system is N, and that the reference pattern length of a word n is Jn, the reference pattern Bn of word n is represented by a series of acoustic features $b_{nj}(j=1, 2, ..., J_n; n=1, 2, ..., N)$ obtained by analyzing the utterance(s) of word n and prepared prior to speech recognition, and is represented in the following form (2).

$$B_n=(b_{n1}, b_{n2}, ..., b_{nj}, ..., b_{nJ_n}) \tag{2}$$

The pattern dissimilarity $D(A, B_n)$ between input pattern A and reference pattern Bn can be obtained by calculating the cumulative distance $g(n; i, j)$ in frame order in accordance with formulas (3), (4), and (5) below, where (4) is a recursive formula, and where the feature dissimilarity between the input pattern acoustic feature ai in frame i and the reference pattern acoustic feature bnj is $d(n; i, j)$, and the cumulative feature dissimilarity up to frame i is $g(n; i, j)$.

Initial condition

$$g(n; i, j) = d(n; i, j) \qquad [i=1, j=1] \qquad (3)$$

$$g(n; i, j) = \infty \qquad [i=1, J \geqq 0, j \neq 1]$$

$$n = 1, 2, ..., N$$

Recursion formula

$$g(n; i, j) = d(n; i, j) + \min\{g(n; i-1, j), g(n; i-1, j-1)\} \qquad (4)$$

$$i=1, 2, ..., I; j=1, 2, ..., Jn; n=1, 2, ..., N$$

Distance between patterns

$$D(A, Bn) = g(n; I, Jn) \qquad (5)$$

$$n=1, 2, ..., N$$

The word n that corresponds to the smallest pattern dissimilarity D(A, Bn) among N pattern dissimilarities D (A, Bn), n= 1, 2, ..., N, obtained using the above formulas is outputted as the result of the recognition process. This explains the DP matching method.

Aside from the DP matching method just described, there exists another method of calculating the distance between patterns by dynamic time warping, called the Hidden Marcov Model (HMM), which employs a probability model. HMM is described, for example, beginning in page 29 of "Speech Recognition by Probability Model" (hereafter referred to as reference 3) written by Seiichi Nakagawa, published by the Electronic Information Communication Society in July, 1998. HMM's process of obtaining the distance between patterns is essentially the same as that of the DP matching method. Hence, the explanation that follows will be assumed to the DP matching method.

The DP matching process has a computation method in which the cumulative distance is obtained in synchrony with the inputting of a frame of the input pattern, as shown in page 1651 of reference 2, so that the recognition result is obtained as soon as the input utterance ends. This can be accomplished using formula (4) above, where formula (4) is performed with j incremented by 1 from 1 to Jn while i remains fixed, after which i is incremented by 1 and the calculation repeats.

When the above-mentioned formula (4) is calculated, only the cumulative distances g(n; i-1, j) (j=1, 2, ..., Jn; n=1, 2, ..., N) in the preceding frame i-1 of the input pattern need to be saved. It will be noted that in the recursion formula (4), g(n; i-1, j) will not be used any further after it has been used to compute the recursion formula (4) in j+1. Thus, when g(n; i-1, j) is transferred to a temporary memory, which will be used during the subsequent step of the recursion formula, after the calculation of formula (4), g(n; i-1, j) can be overwritten in the memory which becomes available by moving g(n; i, j). Hence, the required memory capacity M, which represents the number of cumulative distances g(n; i-1, j) (j=1, 2, ..., Jn; n=1, 2, ..., N) that need to be stored, can be obtained using the following formula (6).

$$M = \sum_{n=1}^{N} (Jn + 1) \qquad (6)$$

From formula (6), it is clear that a larger memory capacity M is required as the number of words N increases.

When the beam search method described in pages 1654-1656 of reference 2 is used, memory capacity M can be reduced. This beam search method (hereafter referred to as "search") uses a pruning strategy that excludes less probable optimal paths from the formula (4) calculation, thus reducing the search space. This method thus allows reduction of the memory capacity M, as only cumulative distances g in the pruned search region need to be stored.

An example of a general memory capacity reduction method that does not limit the objects to be stored would be an encoding method that uses Huffman coding, which minimizes average code length by assigning code to source symbols in accordance with occurrence probabilities, as shown in "Information and Coding Theory" written by Hiroshi Miyagawa, Hiroshi Harasima, and Hideki Imai, published in January 1983 by Iwanami Shoten (hereafter referred to as reference 4).

Recall that when getting the distances between patterns using the DP matching method, a problem occurs in that the memory requirement increases as the number of words increases. This is because the cumulative distances of the reference patterns for all recognizable words need to be stored.

When the above-mentioned beam search method is used for memory compression, there occurs the problem that the recognition rate is reduced. This is because the beam search method removes certain cumulative distances based on local information. For instance, when a cumulative distance becomes locally large due to noise, etc., it may be removed from the search domain even if it is the optimum path for the correct word.

When the Huffman coding method is used for coding/decoding to reduce the memory requirement, the problem is that the compression efficiency is not very high. This is because the cumulative distance values, which are the source symbols, rarely have the same value. Thus, the occurrence probability is seldom biased during the coding/decoding process. (The Huffman coding method is effective when the source symbol occurrence rate is biased).

A DP matching system involving the calculation of cumulative distances, while restricting the number of DP paths similar to the above mentioned reference 2 is known from EP-A-0 525 640.

Summary of the invention

The purpose of the present invention, therefore, is to achieve a high recognition rate with a small memory capacity using a pattern dissimilarity calculator based on the DP matching method.

It is an object of the invention to provide a method of calculating a pattern dissimilarity between a first and second sequence feature pattern.

This object is solved by the features of claims 1, 9 and 10.

Advantageous embodiments of the method are shown in the subclaims.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute part of the specification, illustrate embodiment of the invention and, together with the description, serve to explain the principles of the invention.

Fig. 1 is a conceptual diagram to describe the DP matching method in a pattern dissimilarity calculator;

Fig. 2 shows the configuration of a pattern dissimilarity calculator of the present invention;

Fig. 3A and 3B are flowcharts showing a procedure of calculating a pattern dissimilarity according to a first embodiment;

Fig. 4A and 4B are flowcharts showing a procedure of calculating a pattern dissimilarity according to a second embodiment;

Fig. 5A and 5B are flowcharts showing a procedure of calculating a pattern dissimilarity according to a third embodiment;

Fig. 6 shows a hardware configuration with which calculation of a pattern dissimilarity and speech pattern recognition is performed;

Fig. 7 shows how speech pattern recognition is performed; and

Fig. 8 shows an example of a memory layout of program modules for calculation of a pattern dissimilarity and speech pattern recognition.

DESCRIPTION OF THE PREFERRED EMBODIMENTS

The embodiments according to this invention feature the compression of memory capacity for cumulative distances by storing encoded cumulative distance information by frame using the waveform coding method.

[First Embodiment]

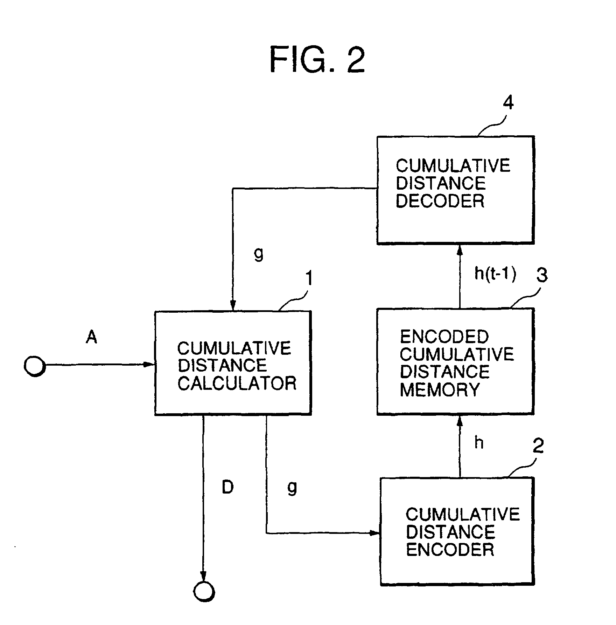

The first embodiment is characterized by the utilization of the waveform coding method used for information compression of correlated sequence samples as the cumulative distance source coding method. The first embodiment will now be explained with reference to Fig. 2. Fig. 2 shows the configuration of a pattern dissimilarity calculator according to the first through third embodiments of the present invention.

According to Fig. 2, the pattern dissimilarity calculator of the first embodiment comprises a cumulative distance calculator 1, which computes the feature dissimilarity between an input pattern A, whose features are presented in a sequence of frames of certain time lengths, and a reference pattern, prepared in advance by frame, and which uses said feature dissimilarity and the cumulative distance computed in the preceding frame to perform the recursion formula calculation to obtain the cumulative distance g in the current frame; a cumulative distance encoder 2, which compresses the cumulative distance g using the waveform coding method used for correlated sequence sample compression and outputs the encoded cumulative distance h; an encoded cumulative distance memory 3, which stores the encoded cumulative distance h; and a cumulative distance decoder 4, which reads the encoded cumulative distance h in the preceding frame from the encoded cumulative distance memory 3, decodes the information compressed by the waveform coding method, and outputs the result to the cumulative distance calculator 1.

The operation of the pattern dissimilarity calculator of the current embodiment will now be explained with reference to Fig. 2.

The encoded cumulative distance memory 3 stores the encoded cumulative distance h(n; i-1, j) (j=1, 2, ..., Jn; n=1, 2, ..., N) of the preceding frame. The encoded cumulative distance h (n; i-1 ,j) uses less number of bits than the cumulative distance g(n; i-1 ,j) since distance h(n; i-1, j) is encoded using the waveform coding method used for the information compression of a correlated sequence sample.

The above-mentioned cumulative distance can be calculated using the recursion formula (4): g(n; i, j) = d(n; i, j) + min{g(n; i-1, j), g(n; i-1, j-1)} (I=1, 2, ..., I; j=1, 2, .... Jn; n=1, 2, .., N).

The encoded cumulative distance h(n; i-1, j) represents the cumulative distance g(n; i-1, j) in encoded form.

In the cumulative distance decoder 4, the encoded cumulative distance h(n; i-1, j) is read from the encoded cumulative distance memory 3, the information that was compressed using the waveform coding method is decoded. Then, the cumulative distance g(n; i-1, j) of the preceding frame is outputted to the cumulative distance calculator 1. The cumulative distance g(n; i-1, j) and the input pattern A expressed in the form of formula (1) are provided as input into the cumulative distance calculator 1.

In the cumulative distance calculator 1, the feature dissimilarity d(n; i, j) between feature ai of the input pattern A and the feature bnj of the reference pattern Bn expressed in the form of formula (2) and stored inside the calculator 1 are first computed. Next, the feature dissimilarity d(n; i, j), the cumulative distance g(n; i-1, j) computed in the preceding frame, and the temporarily stored cumulative distance g(n; i-1, j-1) are used to compute the recursion formula (4) used in the DP matching method. The cumulative distance g(n; i, j) obtained as a result of the calculation is outputted to the cumulative distance encoder 2. At this time, the cumulative distance g (n; i-1, j) inputted into the cumulative distance calculator 1 from the cumulative distance decoder 4 is temporarily stored, to be used in the next recursion formula calculation.

In the cumulative distance encoder 2, the input cumulative distance g(n; i, j) is compressed using the waveform coding method, and the resulting encoded cumulative distance h(n; i, j) is outputted to the encoded cumulative distance memory 3.

In the encoded cumulative distance memory 3, the input encoded cumulative distance h(n; i, j) is stored. The stored encoded cumulative distance h(n; i, j) is used in the next frame's computation.

The above operation is repeated from j=1 through j=Jn and from n=1 through n=N. Also, the operation is repeated from i=1 through i=I. Then, the pattern dissimilarity D(A, Bn) (n=1, 2, ..., N) can be obtained by processing in accordance with formula (5): D(A, Bn) = g(n; I, Jn) (n=1, 2, ..., N).

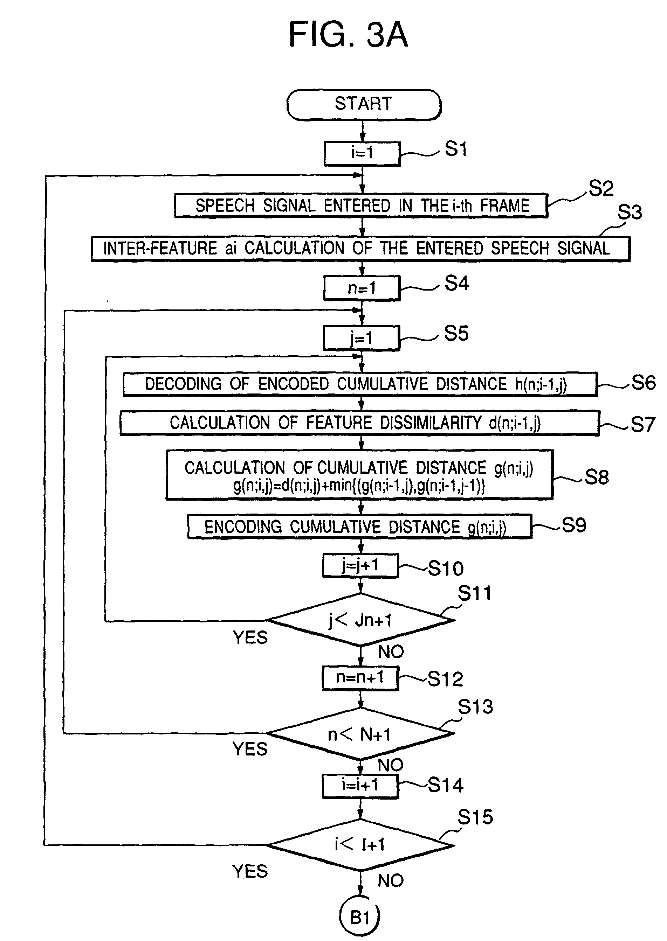

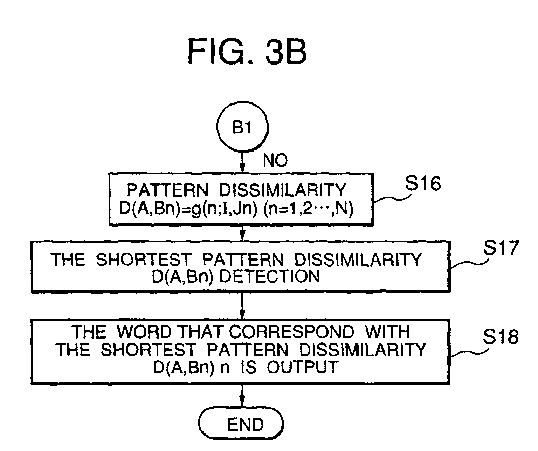

The first embodiment will now be explained in further detail with reference to the flowchart in Figs. 3A and 3B.

First of all, i is initialized in step S1, and, in step S2, the i-th frame of the speech signal is entered. In step S3, the input voice acoustic feature ai in the i-th speech frame is calculated. In steps S4 and S5, n and j are initialized, respectively. In step 6, the encoded cumulative distance h(n; i-1, j) is decoded to g (n; i-1, j). Then in step S7, the feature dissimilarity d(n; i, j) is calculated using the acoustic feature ai of the input pattern A and the acoustic feature bnj of the reference pattern Bn. In step S8, g(n; i, j) is calculated using d(n; i, j), the cumulative distance g(n; i-1, j) decoded in step S6, and g(n; i-1, j-1). In step S9, the cumulative distance g(n; i, j) is encoded and stored as h(n; i, j).

Steps 6 though 10 are performed Jn times (with j incremented by one in step S10). Steps 5 through 12 are performed N times (with n incremented by one in step S12), where N is the number of recognizable words. Furthermore, steps S2 through S14 are performed I times (with i incremented by one in step S14), where I is the number of frames in the input pattern.

After exiting the above loops, the cumulative distance g(n; I, Jn) calculated for each of the N words is regarded as the pattern dissimilarity D(A, Bn). In step S17, the smallest pattern dissimilarity among D(A, Bn) (n= 1, 2, ..., N) is determined and, in step S18, the word that corresponds to the smallest pattern dissimilarity is outputted as the result of the recognition process.

As explained earlier, in the DP matching method, the cumulative distances g(n; i-1, j) (j=1, 2, ..., Jn; n=1, 2, ..., N) in the preceding frame need to be stored. The cumulative distance g can be obtained using formula (4). However, since this is a cumulative value of the distance of two successive frames, it is correlated to the value in the adjacent frame towards the orientation of reference pattern j. Therefore, in the case of the pattern dissimilarity calculator of this embodiment, a far higher compression rate can be obtained by using the waveform coding method used in speech symbol processing, etc. described in pages 99-106 of reference 1 for the compression of cumulative distances, than when the Huffman coding method, as described in reference 4, is used. For instance, highly effective compression methods are available, such as the ADPCM method, which encodes the prediction residual, which is the difference between adjacent samples or between predicted values using their correlation and the value of the actual sample.

As another example of a pattern dissimilarity calculator for this embodiment, the cumulative distance calculator 1 can adopt the recursion formula (7) below, for instance, given in page 164 of reference 1, or the Logarithmic Viterbi Algorithm used for hidden Marcov models described in pages 44-46 of reference 3, which are similar to recursion formula (4).

$$g(n; i, j) = d(n; i, j) + \min\{g(n; i-1, j), d(n; i, j) +$$

$$g(n; i-1, j-1), g(n; I, j-1 )\} \tag{7}$$

[Second Embodiment]

The pattern dissimilarity calculator in the second embodiment features the encoding of cumulative distances in groups. In other words, the waveform coding method can be applied on a frequency range because the multiple cumulative distances to be compressed are treated as a group, thus achieving a high degree of compression of cumulative distances.

The second embodiment of this invention will now be explained. The pattern dissimilarity calculator of this embodiment has the same block configuration as that of the pattern dissimilarity calculator of the first embodiment shown in Fig. 1. It differs from the pattern dissimilarity calculator of the first embodiment 1 in the calculation of the cumulative distance in each of the blocks shown in Fig. 1, and in the source coding/decoding operations. Each of these operations is explained below.

In the cumulative distance decoder 4, jd encoded cumulative distances h(n; i-1, j) (j=k, ..., k+jd-1) from j=k to j=k+jd-1 are read from the encoded cumulative distance memory 3, source expansion is performed on the group using the waveform coding method, and jd cumulative distances g(n; i-1, j) (j=k, ..., k+jd-1) in the preceding frame are outputted to the cumulative distance calculator 1. In the cumulative distance calculator 1, jd cumulative distances g(n; i-1, j) (j=k, ..., k+jd-1) in the preceding frame and input pattern A in the form of formula (1) are inputted.

In the cumulative distance calculator 1, jd feature dissimilarities d(n; i, j) (j=k, ..., k+jd-1), which represent the distances between feature ai of the input pattern A and jd features bnj(j=k, ..., k+jd-1) of the reference pattern Bn stored in the cumulative distance calculator 1, are calculated, after which the jd feature dissimilarities d(n; i, j) (j=k, ..., k+jd-1), the jd cumulative distances g(n; i-1, j) (j=k, ..., k+jd-1) of the preceding frame, and the temporarily stored cumulative distance g(n; i-1, j-1) (j=k) are used to compute the recursion formula (4) from j=k to k+jd-1 with j incremented by 1. The jd cumulative distances g(n; i-1, j) (j=k, ..., k+jd-1) obtained as a result of the calculation are outputted to the cumulative distance encoder 2. At this point, the input cumulative distance g(n; i-1, j) (j=k+jd-1) is stored temporarily, the jd cumulative distances g(n; i, j) (j=k, ..., k+jd-1) inputted into the cumulative distance encoder 2 are source coded as a group using the waveform coding method, and the jd encoded cumulative distances h (n; i, j) (j=k, ..., k+jd-1) are outputted to the cumulative distance memory 3.

The above operation is repeated from n=1 to n=N, from k=1 to k=Jn-jd (with k added to jd) , and from i=1 to i=I. The pattern dissimilarity D(A, Bn) (n=1, 2, ..., N) can then be obtained by using formula (5): D(A, Bn) = g(n; I, Jn) n=1, 2, ..., N.

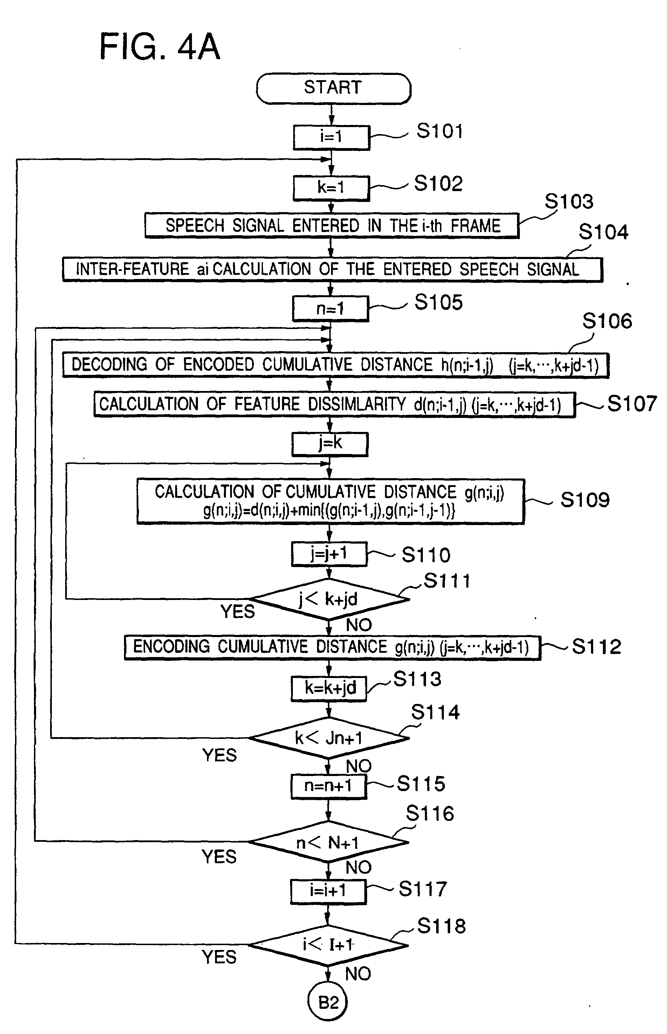

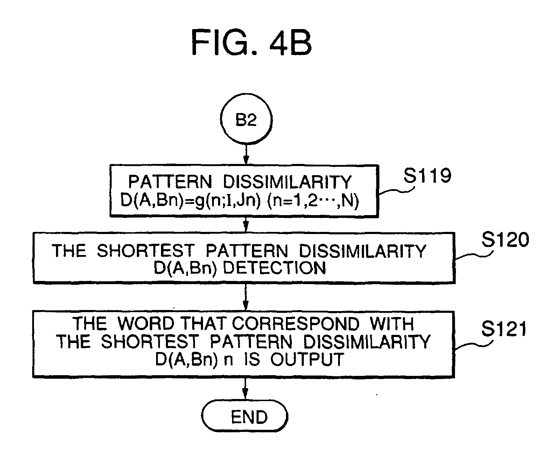

The operation of the second embodiment will now be explained in further detail using the flowcharts in Figs. 4A and 4B. First, i and k are initialized in steps S101 and S102. In step S103, the i-th frame of the input speech signal is entered. In step S104, acoustic feature ai for the i-th frame entered is calculated, and in step S105, n is initialized. In step S106, jd cumulative distances h(n; i-1, j) (j=k, ..., k+jd-1) which have been compressed as a group are decoded to obtain jd g(n; i-1, j) (j=k, ..., k+jd-1).

Then, in step S107, the jd feature dissimilarities d(n; i, j) (j=k, ..., k+jd-1), which are the differences between acoustic feature ai of the input pattern A and acoustic feature bnj of the reference pattern, are calculated. After j is set to k in step S108, the cumulative distance g(n; i, j) is computed in step S109 using the feature dissimilarity d(n; i, j) calculated in step S107, the decoded g (n; i-1, j), and g (n; i-1, j-1). Step S109 is repeated jd times by incrementing j by one each time until j becomes k+jd. In step S112, jd cumulative distances g(n; i, j) (k=k, ..., k+jd-1) are encoded as a group and stored as encoded cumulative distances h (n; i, j) (j=k, ..., k+jd-1), and k is incremented by jd in step S113.

Steps S106 through S115 are performed N times (with n incremented by one in step S114), where N is the number of recognizable words. Furthermore, steps S102 through S117 are performed I times (with i incremented by one in step S117), where I is the number of frames in the input pattern.

After exiting the above loops in step S119, the cumulative distance g(n; I, Jn) calculated for each of the N words is regarded as the pattern dissimilarity D(A, Bn) (n=1, 2, ..., N). In step S120, the smallest pattern dissimilarity is determined and in step S121, the word that corresponds to the smallest pattern dissimilarity is outputted as the result of the recognition process.

The pattern dissimilarity calculator of the second embodiment treats multiple cumulative distances as a group, making it suitable, for instance, for coding methods that make use of the correlation of multiple values in sets. An example of such a coding method would be an adaptive transform coding method that uses an orthogonal transformation, such as cosine transformation, which is one of the coding methods in the frequency domain described in page 110 of reference 1. In other words, compression can be done effectively by reducing the number of bits assigned to components in a frequency domain with small amplitudes, which is the case when the components represent a series of cumulative distances (in order of increasing j) of reference patterns.

A variant of the pattern dissimilarity calculator of this embodiment, specifically for the cumulative distance encoder 2 and the cumulative distance decoder 4, would be a method that uses an orthogonal transformation, such as an adaptive transformation coding method that uses K-L transformation, as described in pages 110-111 of reference 1, or a liftering method, where source coding is performed by excluding certain components. Further, methods other than the adaptive transformation coding method that uses a cosine transformation described in pages 110-111 of reference 1 are available. There are also ways to group cumulative distances other than grouping them per word. For example, cumulative distances can also be grouped per two words or without any limitation whatsoever on the word length.

[Third Embodiment]

In the pattern dissimilarity calculator of the third embodiment, the temporarily stored cumulative distances g(n; i-1, j-1) (i=m, ..., m+id-1) and the decoded cumulative distance g(n; i-1, j) (i=m) are used to compute the recursion formula (4) from i = m to m+id-1 in the direction of i of the input pattern, and only the cumulative distance g(n; i, j) (i=m+id-1) obtained as a result of the calculation is encoded and decorded in compressed form. Moreover, the (id-1) cumulative distances g(n; i, j) (i=m, .., m+id-2) and the decoded g (n; i-1, j) (i= m), obtained during the calculation, are temporarily stored in the memory, to be used in the recursion formula calculation. In other words, the recognition rate deterioration due to the compression of the cumulative distance can be decreased, as (id-1) cumulative distances from i=m to i=m+id-2 are not coded.

The pattern dissimilarity calculator of the third embodiment of this invention will now be described. The pattern dissimilarity calculator in this embodiment has the same block configuration as the pattern dissimilarity calculator in the first embodiment, as shown in Fig. 1. It differs from the pattern dissimilarity calculator of the first embodiment in the cumulative distance calculation operations performed by each of the blocks shown in Fig. 1, and in the associated source coding and decoding operations. The following paragraphs explain each of these operations.

In the cumulative distance decoder 4, the encoded cumulative distance h(n; i-1, j) (i=m) at the time of i=m is read from the encoded cumulative distance memory 3, then the information is expanded using the waveform coding method, and the cumulative distance g(n; i-1, j) (i=m) in the preceding frame is outputted to the cumulative distance calculator 1. The cumulative distance g(n; i-1, j) (i=m) in the preceding frame and the input pattern A in the form of formula (1) are the main inputs of the cumulative distance calculator 1.

In the cumulative distance calculator 1, id feature dissimilarities d(n; i, j) (i=m, ..., m+id-1) between id features ai (i=m, ..., m+id-1) of input pattern A and features bnj of reference pattern Bn, which is expressed in terms of formula (2) and stored inside the calculator 1, are calculated, after which those id feature dissimilarities d (n; i, j) (i=m, ..., m+id-1), the inputted cumulative distance g(n; i-1, j) (i=m) in the preceding frame, and the id cumulative distances g(n; i-1, j-1) (i=m, ..., m+id-1) temporarily stored for i=m to i=m+id-1 are used to compute the recursion formula (4) from i=m to i=m+id-1 in the direction of input frame i, and the cumulative distance g(n; i, j) (i=m+id-1) obtained as a result of the calculation is outputted to the cumulative distance encoder 2. At this point, the cumulative distance g(n; i-1, j) (i=m) in the preceding frame is temporarily stored. At the same time, (id-1) cumulative distances g(n; i, j) (i=m, ..., m+id-2) from i=m to i=m+id-2 obtained as a result of the calculation are temporarily stored, to be used for the next recursion formula calculation.

In the cumulative distance encoder 2, the cumulative distance g(n; i, j) (i=m+id-1) inputted at the time of i=m+id-1 is encoded using the waveform coding method, and the encoded cumulative distance h(n; i, j) (i=m+id-1) that is obtained as a result is outputted to the encoded cumulative distance memory 3.

In the encoded cumulative distance memory 3, the inputted encoded cumulative distance h(n; i, j) (i=m+id-1) is stored.

The above operation is repeated from j=1 to j=Jn and from n=1 to n=N. In addition, the operation is also repeated from m=1 to m=I-id, with m added to id. Finally, the pattern dissimilarity D(A, Bn) (n=1, ..., N) can be obtained using formula (5).

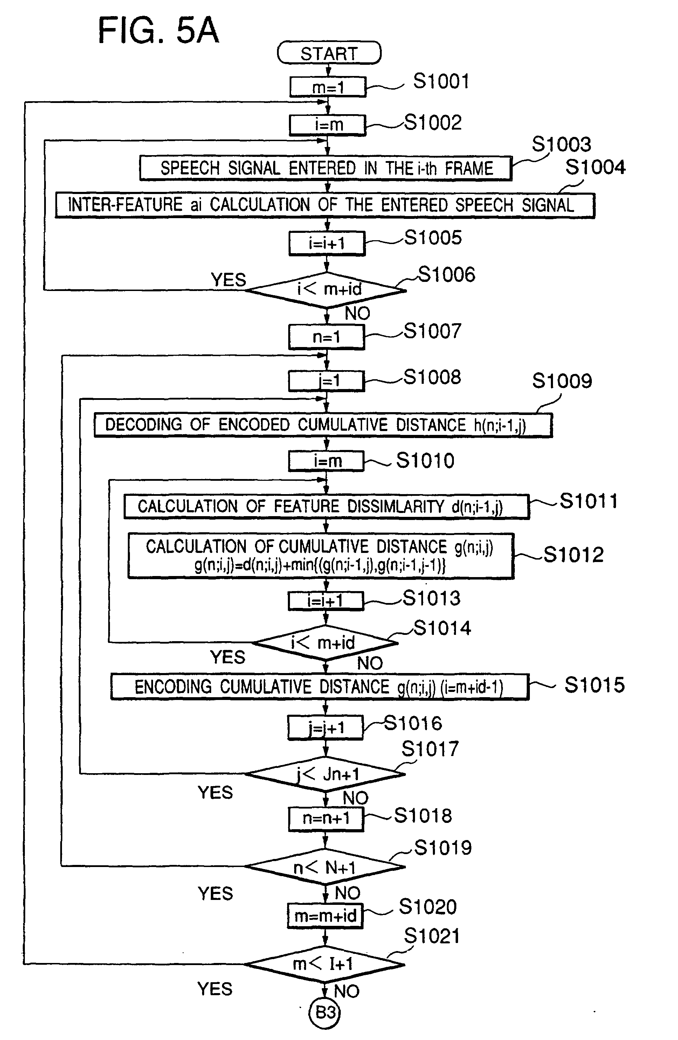

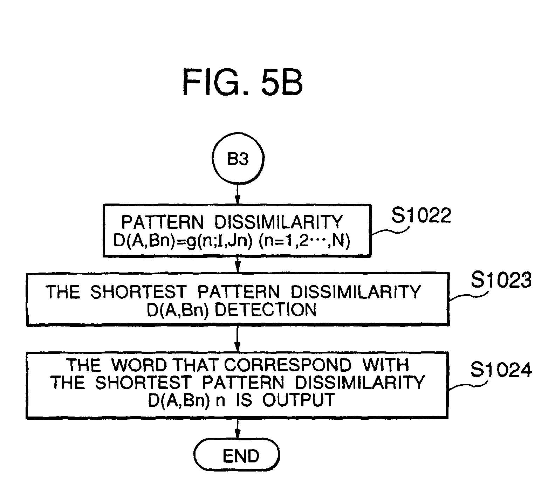

The operation of the third embodiment will now be explained in further detail using the flowcharts in Figs. 5A and 5B. First, the input frame number i is initialized in steps S1001 and S1002. In step S1003, the i-th frame of the speech signal is inputted. In step S1004, the acoustic feature ai for the i-th input frame is calculated. Steps S1003 through S1005 are repeated id times, with i incremented by one in step S1005 each time.

In steps S1007 and S1008, n and j are initialized, and in step S1009, the encoded cumulative distance h(n; i-1, j) (i=m) is decoded to obtain the cumulative distance g(n; i-1, j) (i=m) . In step S1010, i is set to m, and in step S1012, the feature dissimilarity d(n; i, j) calculated in step S1011 and the id temporarily stored cumulative distances g (n; i-1, j-1) (i=m, ..., m+id-1) are used to obtain the cumulative distance g(n; i, j) (i=m, ..., m+id-1). In step S1013, i is incremented by one and steps S1011 through S1013 are repeated id times. In step S1015, the cumulative distance g (n; i, j) (i= m+id-1) is encoded, and the cumulative distances g(n; i, j) (i=m, ..., m+id-1) and the cumulative distance g (n; i-1, j) (i= m) decoded in step S1009 are temporarily stored in the memory. Steps S1009 through S1016 are performed repeatedly, with j incremented by one in step S1016. Steps S1008 through S1018 are repeated N times, where N is the number of recognizable words, with n incremented by one in step S1018. Also, m is incremented by id in step S1020, and steps S1002 through S1020 are repeated until m becomes equal to the number of frames of the input speech.

After the above processing, the cumulative distance g(n; I, Jn) obtained for each of the N recognizable words is regarded as the pattern distance D(A, Bn) in step S1022. In step S1023, the smallest such distance between patterns among N pattern distances is determined, and in step S1024, the word that corresponds to the reference pattern of the smallest pattern dissimilarity is outputted as the recognition result.

The pattern dissimilarity calculator in this embodiment computes the recursion formula from i=m to i=m+id-1, so memory for temporarily storing the id cumulative distances g(n; i-1, j) (i=1, ..., m+id-1) from i = m to i = m+id-1 is required. However, the cumulative distance from i=m to i=m+id-2 is not encoded, and a high recognition rate can still be achieved, as the cumulative distance deterioration due to compression can be reduced.

[Fourth Embodiment]

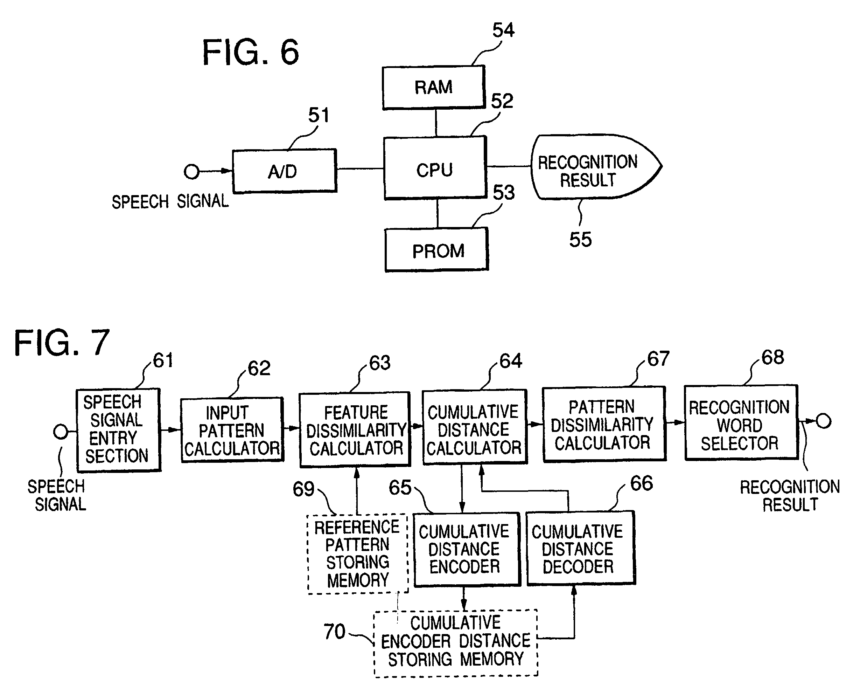

The fourth embodiment of this invention will now be explained with reference to Fig. 6. The pattern dissimilarity calculation process of this invention has been explained in the first through third embodiments. In this embodiment, the hardware configuration, with which the pattern dissimilarity calculation is realized, will be described.

Fig. 6 shows an example of a hardware configuration for the pattern dissimilarity calculation and a speech recognition, where a central processing unit (CPU) 52 executes the processing program that corresponds to each of the pattern dissimilarity calculation procedures shown in the flowcharts of the first through third embodiments of this invention. Further, in Fig. 6, an A/D converter 51 transforms input speech signal to digital signal, and a programmable read only memory (PROM) 53 stores the processing program which calculates the input patterns from the input speech, computes the recursion formula described earlier, obtains the feature dissimilarity between the input pattern and the reference pattern, and outputs the recognition result. A random access memory (RAM) 54 temporarily stores the input patterns of the above-mentioned input speech and the calculation results. The CPU 52 reads the processing program stored in the PROM 53 and interprets and executes the program. A recognition results output apparatus 55 outputs the result of the recognition process and shows what the input speech was.

Next, the operation of the CPU 52 will be explained. First, speech signal is inputted through a speech entry apparatus such as a microphone and is converted into digital signals by the A/D converter 51. The processing program stored in PROM 53 is then read and executed in the CPU 52, and the input pattern for the digitally converted speech signal is obtained. By getting the feature dissimilarity and cumulative distance between the input pattern and the reference pattern stored in the PROM 53 per frame, speech recognition is performed, and a recognition result in the form of characters and/or speech is outputted to the recognition result output apparatus 55, which may be a display device or a speaker. The data needed to execute the processing program, such as the input speech signal, the input pattern obtained as a result of the calculation, the cumulative distance, or the encoded cumulative distance, are temporarily stored in the RAM 54.

The hardware configuration described above has a CPU as one of its components. However, this CPU can clearly be replaced by a Digital Signal Processor (DSP), a microsequencer, or a sequential circuit.

[Fifth Embodiment]

The fifth embodiment of the present invention provides a speech recognition system using the pattern dissimilarity calculation method explained in the first through third embodiments. The fifth embodiment will now be explained referring to Fig. 7.

Fig. 7 is an example of a speech recognition operation, and corresponding program modules to realize the operation are stored in a PROM 53 in Fig. 6. In the figure, a speech signal entry section 61 stores an input speech signal in a buffer by frame. An input pattern calculator 62 calculates the input pattern from the input speech. An feature dissimilarity calculator 63 calculates the distance between features using the input pattern calculated in the input pattern calculator 62 and the reference pattern already calculated and stored (according to the unit of speech to be analyzed) in a reference pattern memory 69. A cumulative distance calculator 64 computes the cumulative distance using the previously calculated cumulative distance and the cumulative feature dissimilarity by frame calculated in the feature dissimilarity calculator 63. A cumulative distance encoder 65 compresses information by encoding the cumulative distance calculated in the cumulative distance encoder 65 and stores the compressed distance in a cumulative encoded distance memory 70. A cumulative distance decoder 66 decodes the encoded cumulative distance. An pattern dissimilarity calculator 67 gets the cumulative distances, by word, calculated in the cumulative distance calculator 64 as the distance between patterns. A recognition word selector 68 determines from among the pattern dissimilarities outputted by 67 the shortest pattern dissimilarity, and outputs as recognition result the word that corresponds to the reference pattern. The input pattern calculator 62, feature dissimilarity calculator 63, and cumulative distance calculator 64 correspond to the cumulative distance calculator 1 in Fig. 2.

The program modules shown in Fig. 7 are read, interpreted, and executed by the CPU 52, after which the result is outputted to and displayed by recognition result output apparatus 55.

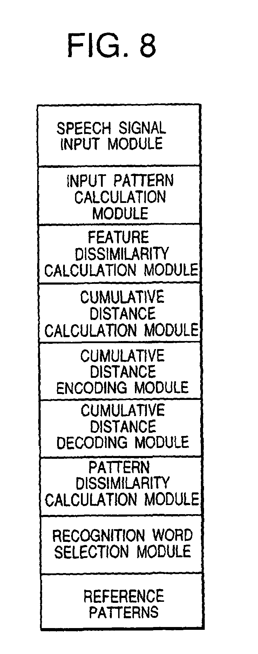

Fig. 8 shows an example of a memory layout in PROM 53, of program modules which are executed by the CPU 52, according to the flowcharts in Figs. 3A and 3B, Fig. 4A and 4B, Fig. 5A and 5B, and the program configuration in Fig. 7. The speech signal input module in Fig. 8 is a program to realize the operation of the speech signal entry section 61 in Fig. 7. Likewise, the input pattern calculation module is a program to realize the operation of the input pattern calculator 62, the feature dissimilarity calculation module is a program to realize the operation of the feature dissimilarity calculator 63, the cumulative distance calculation module is a program to realize the operation of the cumulative distance calculator 64, the cumulative distance encoding module is a program to realize the operation of the cumulative distance encoder 66, the pattern dissimilarity calculation module is a program to realize the operation of the pattern dissimilarity calculator 67, and the recognition word selection module is a program to realize the operation of the recognition word selector 68. The reference patterns stored in the PROM 53 are used for the calculation of a feature dissimilarity.

Further, the above program modules can be stored in a floppy disk, a hard disk, etc., instead of in a PROM, to be read, interpreted, and executed, by the CPU 52.

Therefore, the present invention have some benefits.

The first benefit of the invention is the reduction of the memory capacity required to store the cumulative distances when pattern recognition processing based on a DP matching method such as that shown in page 1651 of reference 2 is performed. This is because cumulative distance information is compressed by high efficiency source coding means, made possible by taking advantage of the features of the cumulative distances which the invention provides.

The second benefit of the invention is the recognition of patterns without compromising the recognition rate. This is because the pattern dissimilarity computation searches the entire search space, whereas a beam search method may reduce the recognition rate by pruning the optimum path.

Further, the pattern dissimilarity calculation method and the apparatus of this invention used for speech recognition have been explained. It is to be understood that the method and the apparatus can also be used for image recognition.

As many apparently widely different embodiments of the present invention can be made without departing from the scope of the claims, it is to be understood that the invention is not limited to the specific described embodiments.

**Claims**

1. A method of calculating a pattern dissimilarity between a first and second sequence feature pattern based on the DP matching approach, comprising:

   a cumulative distance calculation step of calculating the distance between frame i of said first sequence feature pattern and each frame of said second sequence feature pattern and obtaining a current cumulative distance by adding said distance to a cumulative distance obtained in terms of frame i-1, **characterized by**
   an encoding step of encoding the cumulative distance calculated in the cumulative distance calculation step;
   a decoding step for decoding the cumulative distance encoded in the encoding step at frame i-1 and used in the cumulative distance calculation step.

2. The method of calculating a pattern dissimilarity according to claim 1, wherein the first sequence feature pattern is a sequence feature pattern of voice input data, while the second sequence feature pattern is a predetermined reference sequence feature pattern.

3. The method of calculating a pattern dissimilarity according to claim 1, wherein, in the encoding step, the cumulative distance in terms of frame i obtained in the cumulative distance calculation step is encoded based on correlation with a cumulative distance in terms of frame i-1.

4. The method of calculating a pattern dissimilarity according to claim 1, wherein, in the encoding step, the cumulative distance obtained in the cumulative distance calculation step is encoded using one of; ADPCM (Adaptive Pulse Code Modulation), DPCM (Differential Adaptive Pulse Code Modulation), ADPCM (Adaptive Differential Pulse Code Modulation), APC (Adaptive Predictive Coding), DM (Delta Modulation), ADM (Adaptive Delta Moldulation) or any of their combinations.

5. The method of calculating a pattern dissimilarity according to claim 1, wherein, in the encoding step, the cumulative distance obtained in the cumulative distance calculation step is encoded, and the encoded cumulative distance is stored in a storage means, while, in the decoding step, the latest encoded cumulative distance stored in the storage means is decoded.

6. The method of calculating a pattern dissimilarity according to claim 1, wherein, in the encoding step, a group of cumulative distances obtained in the cumulative distance calculation step are encoded.

7. The method of calculating a pattern dissimilarity according to claim 1, wherein, in the encoding step, a group of cumulative distances obtained in the cumulative calculation step are encoded by transforming the group into a frequency space.

8. The method of calculating a pattern dissimilarity according to claim 1, wherein, in the encoding step, a group of cumulative distances obtained in the cumulative distance calculation step are encoded using the ATC (Adaptive Transform Coding) approach.

9. An apparatus for calculating a pattern dissimilarity between a first and second sequence feature pattern based on the DP matching approach, comprising:

   cumulative distance calculation means (1) for calculating the distance between frame i of said first sequence feature pattern and each frame of said second sequence feature pattern, and obtaining a current cumulative distance by adding said distance to a cumulative distance obtained in terms of frame i-1, **characterized by**

   encoding means (2) for encoding the cumulative distance calculated by the cumulative distance calculation means; and decoding means (4) for decoding the cumulative distance encoded at frame i-1 by the encoding means and used by the cumulative distance calculation means.

10. An article of manufacture comprising: a computer usable medium having computer readable program code means embodied therein for causing a pattern dissimilarity between a first and second sequence feature pattern to be calculated using a recursion formula, the computer readable program code means in said article of manufacture comprising:

   a first computer readable program code means for causing the distance between frame i of said first sequence feature pattern and each frame of said second sequence feature pattern to be calculated, and a current cumulative distance to be calculated by adding said distance to a cumulative distance obtained in terms of frame i-1, **characterized by**
   a third computer readable program code means for causing the cumulative distance calculated by the first computer readable program code means to be encoded;
   a second computer readable program code means which causes the cumulative distance encoded by the third computer readable program code means to be decoded and used by the first computer readable program code means.

**Patentansprüche**

1. Verfahren zum Berechnen einer Unähnlichkeit von Mustern zwischen einem ersten und einem zweiten Folgestrukturmuster, basierend auf der DP-(Datenverarbeitung)-Anpassungslösung mit:

einem kumulativen Abstandsberechnungsschritt zum Berechnen des Abstandes zwischen dem Rahmen i des ersten Folgestrukturmusters und jedem Rahmen des zweiten Folgestrukturmusters, und Erzielen eines laufenden kumulativen Abstandes durch Addieren dieses Abstandes zu einem kumulativen Abstand, der in Termen des Rahmens i-1 erhalten worden ist, **gekennzeichnet durch**
einen Codierschritt zum Codieren des kumulativen Abstandes, der in dem kumulativen Abstandsberechnungsschritt berechnet worden ist;
einem Dekodierschritt zum Dekodieren des kumulativen Abstandes, der in dem Codierschritt am Rahmen i-1 codiert worden ist, und in dem kumulativen Abstandsberechnungsschritt verwendet worden ist.

2. Verfahren zum Berechnen einer Unähnlichkeit von Mustern nach Anspruch 1, wobei das erste Folgestrukturmuster ein Folgestrukturmuster von Stimmeingangsdaten ist, während das zweite Folgestrukturmuster ein vorbestimmtes Referenzfolgestrukturmuster ist.

3. Verfahren zum Berechnen der Unähnlichkeit von Mustern nach Anspruch 1, wobei in dem Codierschritt der kumulative Abstand in Termen des Rahmens i, der in dem kumulativen Abstandsberechnungsschritt erhalten worden ist, basierend auf der Korrelation zu einem kumulativen Abstand in Termen des Rahmens i-1 codiert wird.

4. Verfahren zum Berechnen der Unähnlichkeit von Mustern nach Anspruch 1, wobei in dem Codierschritt der kumulative Abstand, der in dem kumulativen Abstandsberechnungsschritt erhalten worden ist, kodiert wird unter der Verwendung von: ADPCM (adaptive Pulscodemodulation), DPCM (differentielle adaptive Pulscodemodulation), ADPCM (adaptive, differentielle Pulscodemodulation), APC (adaptive, vorhersagende Codierung), DM (Delta-Modulation), ADM (adaptive Delta-Modulation), oder jede ihrer Kombinationen.

5. Verfahren zum Berechnen der Unähnlichkeit von Mustern nach Anspruch 1, wobei in dem Codierschritt der kumulative Abstand, der in dem kumulativen Abstandsberechnungsschritt erhalten worden ist, codiert wird; und der codierte kumulative Abstand in einem Speichermittel gespeichert wird, während in dem Dekodierschritt der neueste codierte kumulative Abstand, der in dem Speichermittel gespeichert worden ist, dekodiert wird.

6. Verfahren zum Berechnen der Unähnlichkeit von Mustern nach Anspruch 1, wobei in dem Codierschritt eine Gruppe von kumulativen Abständen, die in dem kumulativen Abstandsberechnungsschritt erhalten worden sind, kodiert werden.

7. Verfahren zum Berechnen der Unähnlichkeit von Mustern nach Anspruch 1, wobei in dem Codierschritt eine Gruppe von kumulativen Abständen, die in dem kumulativen Berechnungsschritt erhalten worden sind, durch Transformieren der Gruppe in einen Frequenzraum kodiert werden.

8. Verfahren zum Berechnen der Unähnlichkeit von Mustern nach Anspruch 1, wobei in dem Codierschritt eine Gruppe kumulativer Abstände, die in dem kumulativen Abstandsberechnungsschritt erhalten worden sind, unter Verwendung der ATC-(adaptive Umformcodierung)-Lösung kodiert werden.

9. Vorrichtung zum Berechnen der Unähnlichkeit von Mustern zwischen einem ersten und einem zweiten Folgestrukturmuster basierend auf der DP-Anpassungslösung, mit:

kumulativen Abstandsberechnungsmitteln (1) zum Berechnen des Abstandes zwischen dem Rahmen i des ersten Folgestrukturmusters und jedem Rahmen des zweiten Folgestrukturmusters, und Erhalten eines laufenden kumulativen Abstandes durch Addieren dieses Abstandes zu einem kumulativen Abstand, der in Termen des Rahmens i-1 erhalten worden ist, **gekennzeichnet durch**
Codiermittel (2) zum Codieren des kumulativen Abstandes, der **durch** die kumulativen Abstandsberechnungsmittel berechnet worden ist; und Dekodiermittel (4) zum Dekodieren des kumulativen Abstandes, der beim Rahmen i-1 **durch** die Codiermittel codiert worden ist, und **durch** die kumulativen Abstandsberechnungsmittel verwendet worden ist.

10. Gegenstand der Herstellung mit: einem Computer, der als Medium verwendbar ist, mit einer computerlesbaren Programmcode-Einrichtung, die in diesem eingebaut ist, um zwischen einem ersten und einem zweiten Folgestrukturmuster eine Unähnlichkeit von Mustern zu bewirken, die unter Verwendung einer Rekursionsformel berechnet werden soll, wobei die computerlesbare Programmcodeeinrichtung in dem Gegenstand der Herstellung aufweist:

eine erste computerlesbare Programmcodeeinrichtung, die bewirkt, dass der Abstand zwischen dem Rahmen i des ersten Folgestrukturmusters und jedem Rahmen des zweiten Folgestrukturmusters berechnet wird, und ein laufender kumulativer Abstand berechnet wird, indem dieser Abstand einem kumulativen Abstand addiert wird, der in Termen des Rahmens i-1 erhalten wird, **gekennzeichnet durch**:

eine dritte computerlesbare Programmcodeeinrichtung, die bewirkt, dass der kumulative Abstand, der **durch** die erste computerlesbare Programmcodeeinrichtung berechnet worden ist, kodiert wird; eine zweite computerlesbare Programmcodeeinrichtung, die bewirkt, dass der kumulative Abstand, der **durch** die dritte computerlesbare Programmcodeeinrichtung codiert worden ist, und **durch** die erste computerlesbare Programmcodeeinrichtung verwendet wird, dekodiert wird.

## Revendications

1. Procédé de calcul de dissemblance de formes entre une première et une deuxième forme à caractéristiques séquentielles sur la base de l'approche par correspondance DP, comprenant :

   une étape de calcul de distance cumulative pour calculer la distance entre la trame i de ladite première forme à caractéristiques séquentielles et chaque trame de ladite deuxième forme à caractéristiques séquentielles et pour obtenir une distance cumulative actuelle en ajoutant ladite distance à une distance cumulative obtenue en fonction de la trame i-1, **caractérisé par**
   une étape de codage pour coder la distance cumulative calculée dans l'étape de calcul de distance cumulative;
   une étape de décodage pour décoder la distance cumulative codée dans l'étape de codage à la trame i-1 et utilisée dans l'étape de calcul de distance cumulative.

2. Procédé de calcul de dissemblance de formes selon la revendication 1, dans lequel la première forme à caractéristiques séquentielles est une forme à caractéristiques séquentielles de données d'entrée vocales, tandis que la deuxième forme à caractéristiques séquentielles est une forme à caractéristiques séquentielles de référence prédéterminée.

3. Procédé de calcul de dissemblance de formes selon la revendication 1, dans lequel, dans l'étape de codage, la distance cumulative en fonction de la trame i obtenue dans l'étape de calcul de distance cumulative est codée sur la base d'une corrélation avec une distance cumulative en fonction de la trame i-1.

4. Procédé de calcul de dissemblance de formes selon la revendication 1, dans lequel, dans l'étape de codage, la distance cumulative obtenue dans l'étape de calcul de distance cumulative est codée par un des moyens suivants : MICDA (modulation par impulsion et codage différentiel adaptatif), MICDP (modulation par impulsion et codage à détection différentielle), CPA (codage prédictif adaptatif), MD (modulation delta), MDA (modulation delta adaptative) ou une quelconque de. leurs combinaisons.

5. Procédé de calcul de dissemblance de formes selon la revendication 1, dans lequel, dans l'étape de codage, la distance cumulative obtenue dans l'étape de calcul de distance cumulative est codée, et la distance cumulative codée est stockée dans un moyen de stockage, tandis que, dans l'étape de décodage, la distance cumulative codée la plus récente stockée dans le moyen de codage est décodée.

6. Procédé de calcul de dissemblance de formes selon la revendication 1, dans lequel, dans l'étape de codage, un groupe de distances cumulatives obtenues dans l'étape de calcul de distance cumulative est codé.

7. Procédé de calcul de dissemblance de formes selon la revendication 1, dans lequel, dans l'étape de codage, un groupe de distances cumulatives obtenues dans l'étape de calcul de distance cumulative est codé en transformant le groupe en un intervalle de fréquence.

8. Procédé de calcul de dissemblance de formes selon la revendication 1, dans lequel, dans l'étape de codage, un groupe de distances cumulatives obtenues dans l'étape de calcul de distance cumulative est codé au moyen de l'approche CAC (codage adaptatif par conversion).

**9.** Appareil pour calculer une dissemblance de formes entre une première et une deuxième forme à caractéristiques séquentielles sur la base de l'approche par comparaison DP, comprenant :

des moyens de calcul de distance cumulative (1) pour calculer la distance entre la trame i de ladite première forme à caractéristiques séquentielles et chaque trame de ladite deuxième forme à caractéristiques séquentielles, et pour obtenir une distance cumulative actuelle en ajoutant ladite distance à une distance cumulative obtenue en fonction de la trame i-1, **caractérisé par**
des moyens de codage (2) pour coder la distance cumulative calculée par les moyens de calcul de distance cumulative; et des moyens de décodage (4) pour décoder la distance cumulative codée à la trame i-1 par le moyen de codage et utilisée par les moyens de calcul de distance cumulative.

**10.** Produit manufacturé comprenant : un support utilisable par ordinateur ayant des moyens de code programme lisible par ordinateur incorporés qui effectuent le calcul d'une dissemblance de formes entre une première et une deuxième forme à caractéristiques séquentielles au moyen d'une formule récurrente, les moyens de code programme lisible par ordinateur dans le dit produit manufacturé comprenant :

un premier moyen de code programme lisible par ordinateur qui effectue le calcul de la distance entre la trame i de ladite première forme à caractéristiques séquentielles et chaque trame de ladite deuxième forme à caractéristiques séquentielles, et une distance cumulative actuelle en ajoutant ladite distance à une distance cumulative obtenue en fonction de la trame i-1, **caractérisé par** :

un troisième moyen de code programme lisible par ordinateur qui effectue le codage de la distance cumulative calculée par le premier moyen de code programme lisible par ordinateur;
un deuxième moyen de code programme lisible par ordinateur qui effectue le décodage de la distance cumulative codée par le troisième moyen de code programme lisible par ordinateur et son utilisation par le premier moyen de code programme lisible par ordinateur.

# FIG. 1

STANDARD PATTERN

$$D(A,Bn) = g(n;I,Jn)$$

$$g(n;i-1,j)$$

$$g(n;i,j)$$

$$g(n;i-1,j-1)$$

INPUT PATTERN

# FIG. 2

# FIG. 3A

```
                    START

                    i=1 ──── S1

        SPEECH SIGNAL ENTERED IN THE i-th FRAME ──── S2
                                                          S3
    INTER-FEATURE ai CALCULATION OF THE ENTERED SPEECH SIGNAL

                    n=1 ──── S4

                    j=1 ──── S5

        DECODING OF ENCODED CUMULATIVE DISTANCE h(n;i-1,j) ──── S6

        CALCULATION OF FEATURE DISSIMILARITY d(n;i-1,j) ──── S7

        CALCULATION OF CUMULATIVE DISTANCE g(n;i,j)
        g(n;i,j)=d(n;i,j)+min{(g(n;i-1,j),g(n;i-1,j-1)}  ──── S8

        ENCODING CUMULATIVE DISTANCE g(n;i,j) ──── S9

                    j=j+1 ──── S10

                                        S11
                    j< Jn+1
            YES                NO

                    n=n+1 ──── S12
                                        S13
                    n< N+1
            YES                NO

                    i=i+1 ──── S14
                                        S15
                    i< I+1
            YES                NO

                    B1
```

# FIG. 3B

B1

NO

PATTERN DISSIMILARITY
$D(A,Bn)=g(n;I,Jn)$ $(n=1,2\cdots,N)$ —— S16

THE SHORTEST PATTERN DISSIMILARITY
$D(A,Bn)$ DETECTION —— S17

THE WORD THAT CORRESPOND WITH
THE SHORTEST PATTERN DISSIMILARITY
$D(A,Bn)$ n IS OUTPUT —— S18

END

## FIG. 4A

```
           START
             │
           i=1          ── S101
             │
           k=1          ── S102
             │
  SPEECH SIGNAL ENTERED IN THE i-th FRAME   ── S103
             │
  INTER-FEATURE ai CALCULATION OF THE ENTERED SPEECH SIGNAL   ── S104
             │
           n=1          ── S105
             │
  DECODING OF ENCODED CUMULATIVE DISTANCE h(n;i-1,j)  (j=k,⋯,k+jd-1)   ── S106
             │
  CALCULATION OF FEATURE DISSIMLARITY d(n;i-1,j) (j=k,⋯,k+jd-1)   ── S107
             │
           j=k
             │
  CALCULATION OF CUMULATIVE DISTANCE g(n;i,j)   ── S109
  g(n;i,j)=d(n;i,j)+min{(g(n;i-1,j),g(n;i-1,j-1)}
             │
           j=j+1        ── S110
             │
        ◇ j< k+jd ◇     ── S111
      YES │   │ NO
          │   │
  ENCODING CUMULATIVE DISTANCE g(n;i,j) (j=k,⋯,k+jd-1)   ── S112
             │
           k=k+jd       ── S113
             │
        ◇ k< Jn+1 ◇     ── S114
      YES │   │ NO
          │   │
           n=n+1        ── S115
             │
        ◇ n< N+1 ◇      ── S116
      YES │   │ NO
          │   │
           i=i+1        ── S117
             │
        ◇ i< I+1 ◇      ── S118
      YES │   │ NO
             │
            B2
```

# FIG. 4B

B2

PATTERN DISSIMILARITY
$D(A,Bn)=g(n;I,Jn)$ $(n=1,2\cdots,N)$ — S119

THE SHORTEST PATTERN DISSIMILARITY
$D(A,Bn)$ DETECTION — S120

THE WORD THAT CORRESPOND WITH
THE SHORTEST PATTERN DISSIMILARITY
$D(A,Bn)$ n IS OUTPUT — S121

END

## FIG. 5A

START

m=1 — S1001

i=m — S1002

SPEECH SIGNAL ENTERED IN THE i-th FRAME — S1003

INTER-FEATURE ai CALCULATION OF THE ENTERED SPEECH SIGNAL — S1004

i=i+1 — S1005

i< m+id — S1006   YES / NO

n=1 — S1007

j=1 — S1008

DECODING OF ENCODED CUMULATIVE DISTANCE h(n;i-1,j) — S1009

i=m — S1010

CALCULATION OF FEATURE DISSIMLARITY d(n;i-1,j) — S1011

CALCULATION OF CUMULATIVE DISTANCE g(n;i,j) — S1012
$g(n;i,j)=d(n;i,j)+min\{(g(n;i-1,j),g(n;i-1,j-1)\}$

i=i+1 — S1013

i< m+id — S1014   YES / NO

ENCODING CUMULATIVE DISTANCE g(n;i,j) (i=m+id-1) — S1015

j=j+1 — S1016

j< Jn+1 — S1017   YES / NO

n=n+1 — S1018

n< N+1 — S1019   YES / NO

m=m+id — S1020

m< I+1 — S1021   YES / NO

(B3)

20

# FIG. 5B

B3

PATTERN DISSIMILARITY
$D(A,Bn)=g(n;I,Jn)$ $(n=1,2\cdots,N)$ — S1022

THE SHORTEST PATTERN DISSIMILARITY
$D(A,Bn)$ DETECTION — S1023

THE WORD THAT CORRESPOND WITH
THE SHORTEST PATTERN DISSIMILARITY
$D(A,Bn)$ n IS OUTPUT — S1024

END

EP 0 834 858 B1

# FIG. 6

```
                                    ┌──────────┐ 54
                                    │   RAM    │
                                    └──────────┘ 52
              51                    ┌──────────┐      ┌──────────────┐
         ┌──────────┐               │          │      │ RECOGNITION  │
  o─────▶│   A/D    │───────────────│   CPU    │──────│   RESULT     │
         └──────────┘               │          │      └──────────────┘
SPEECH SIGNAL                       └──────────┘ 53
                                    ┌──────────┐              55
                                    │   PROM   │
                                    └──────────┘
```

# FIG. 7

# FIG. 8

| |
|---|
| SPEECH SIGNAL INPUT MODULE |
| INPUT PATTERN CALCULATION MODULE |
| FEATURE DISSIMILARITY CALCULATION MODULE |
| CUMULATIVE DISTANCE CALCULATION MODULE |
| CUMULATIVE DISTANCE ENCODING MODULE |
| CUMULATIVE DISTANCE DECODING MODULE |
| PATTERN DISSIMILARITY CALCULATION MODULE |
| RECOGNITION WORD SELECTION MODULE |
| REFERENCE PATTERNS |